(19) Europäisches Patentamt

European Patent Office

Office européen des brevets

(11) **EP 1 059 139 B1**

(12) **FASCICULE DE BREVET EUROPEEN**

(45) Date de publication et mention
de la délivrance du brevet:
**19.04.2006 Bulletin 2006/16**

(51) Int Cl.:
***B23K 26/08*** *(2006.01)*    ***B23K 26/00*** *(2006.01)*
***B23K 26/06*** *(2006.01)*

(21) Numéro de dépôt: **00470010.0**

(22) Date de dépôt: **08.06.2000**

(54) **Microperforation laser de films thermoplastiques ou cellulosiques par fibres optiques**

Laser-Mikroperforation von thermoplastischen oder cellulosischen Filmen mittels optischer Fasern

Laser microperforation of thermoplastic or cellulosic films by means of optical fibres

(84) Etats contractants désignés:
**AT BE CH CY DE DK ES FI FR GB GR IE IT LI LU
MC NL PT SE**

(30) Priorité: **11.06.1999 FR 9907522**

(43) Date de publication de la demande:
**13.12.2000 Bulletin 2000/50**

(73) Titulaire: **BRODART S.A.
10700 Arcis sur Aube (FR)**

(72) Inventeurs:
• **ROYER, Pascal George Pierre
10000 Troyes (FR)**

• **BRODART, Michel Jean Roger
10700 Torcy le Grand (FR)**
• **DELSAHUT, Alain
10000 Troyes (FR)**

(74) Mandataire: **Orès, Bernard
Cabinet ORES
36,rue de St Pétersbourg
75008 Paris (FR)**

(56) Documents cités:
**EP-A- 0 549 357          US-A- 5 430 816**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne un système de microperforations Laser de Films thermoplastiques ou cellulosiques conformément au préambule de la revendication 1.

Ces Systèmes, objets de l'invention permettent notamment la réalisation de très faibles sections de perforations et d'un grand nombre de celles-çi, d'une manière simultanée, par unité de surface.

Dans l'état de l'art actuel, les différents équipements utilisés pour la perforation des Films thermoplastiques ou cellulosiques sont fréquemment du type "mécanique", ou thermique du type aiguilles chaudes dans lesquels le Film défilant est perforé après passage sur un rouleau hérissé d'aiguilles très fines.

Les inconvénients d'une telle solution résident dans la qualité des microperforations obtenues de diamètre irrégulier et aléatoire, d'une part, et surtout dans la trop grande dimension des pointes perforatrices qui conduit à des surfaces de perforations beaucoup trop élevées dans la plupart des applications d'autre part.

Par ailleurs, en exploitation, une modification de la taille des microperforations et de l'écartement entre elles ne peut s'effectuer que par un changement de l'ensemble du rouleau perforateur, d'où une grande limitation dans les possibilités de réalisation à la fois pour des raisons techniques et économiques.

D'autres équipements industriels de microperforation mieux adaptés que les équipements essentiellement mécaniques pour la résolution des problèmes posés et plus perfectionnés sont basés, d'un point de vue général, sur les applications des Lasers. Cependant, il est difficile d'obtenir avec les techniques Laser seules, un perçage simultané d'un grand nombre de trous malgré la mise en oeuvre possible de photo masques éclairés chacun de façon homogène par un laser, ce qui conduit à une technique complexe et coûteuse.

Les systèmes de déflexion des faisceaux lumineux émis par les lasers, à l'aide de miroirs galvanométriques tournants représentent une autre alternative au perçage simultané des trous, mais la quantité de trous obtenus reste relativement faible au regard des besoins. Il est ainsi difficile d'envisager la mise en oeuvre de tels équipements dans un grand nombre d'applications où la haute performance et le meilleur compromis technico-économique sont recherchés.

Le document US 5,430,816, sur lequel est basé le préambule de la revendication 1, décrit un système optique de microperforations comportant une source laser délivrant des énergies lumineuses dans un câble à fibres optiques. Celles-ci sont fixées dans l'alignement de lentille convergentes pour générer un grand nombre de taches lumineuses perforatrices de très faible diamètre. Un tel système est donc compliqué à mettre en oeuvre car il faut que l'alignement des fibres avec les lentilles soit parfait. De plus, la présence des lentilles induit une perte d'énergie qui doit être compensée par l'utilisation d'un laser à forte puissance.

Les objectifs généraux de l'invention consistent à effectuer les nombreuses perforations nécessaires par l'intermédiaire d'un ou plusieurs faisceaux de Fibres Optiques insérés entre une ou plusieurs sources Laser et le Film à perforer.

L'énergie lumineuse du ou des Lasers est répartie également entre chacune des Fibres Optiques du ou des faisceaux do Fibres Optiques et le nombre de Fibres Optiques est égal au nombre de trous à perforer, soit par ligne de perforations dans le cas le plus général d'un Film thermoplastique ou cellulosique défilant devant elle, soit pour l'ensemble complet des perforations dans le cas d'un motif de microperforations complexe ne représentant pas un pointillisme linéaire mais par exemple circulaire, le Film thermoplastique ou cellulosique devant dans cette hypothèse rester fixe pendant les irradiations lumineuses.

Les perforations obtenues résultent principalement des effets thermiques dûs à l'absorption de la lumière dans une petite surface des Films et des phénomènes de photoablation particulièrement sensibles aux longueurs d'onde ultraviolettes qui sont utilisées d'une manière non limitative suivant l'un des objets de l'invention.

D'autres objets de l'invention concernent, d'une part, les systèmes optiques permettant une répartition sensiblement égale et homogène de la lumière émise par une ou plusieurs sources Laser dans le ou les faisceaux de Fibres Optiques et dans chacune des Fibres Optiques constituant les faisceaux élémentaires et d'autre part les systèmes homogénéiseurs-focalisateurs en sortie des Fibres Optiques permettant d'obtenir sur le Film thermoplastique à perforer des taches lumineuses d'intensité égale d'une tache à l'autre et sensiblement homogène à l'intérieur de chaque tache.

L'invention sera mieux comprise à l'aide des figures qui suivent. Cependant, l'invention relative à la microperforation d'un Film thermoplastique ou cellulosique défilant et la plus utilisée en pratique sera décrite en priorité.

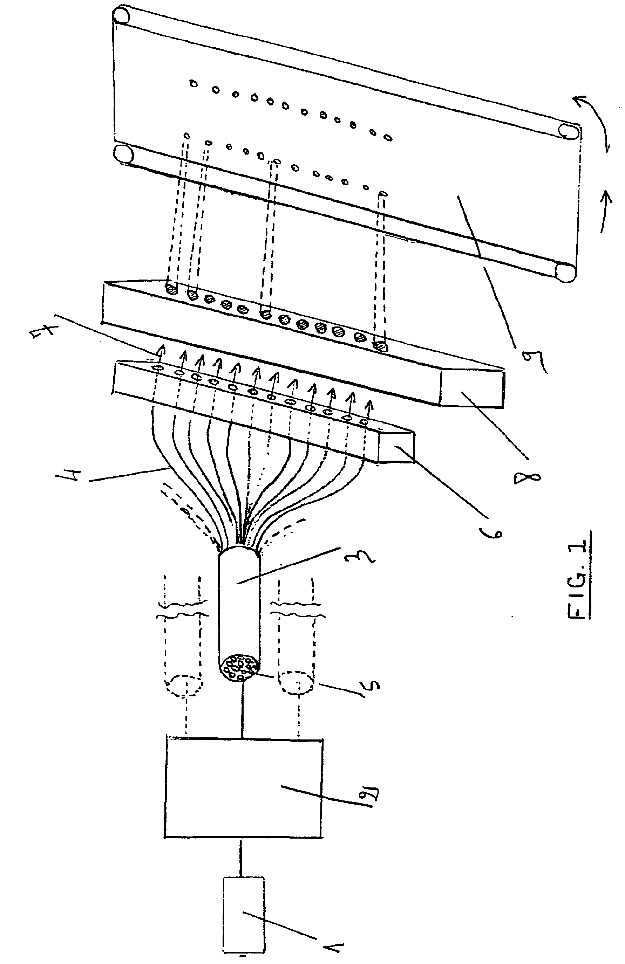

La Figure 1 représente très schématiquement un équipement de microperforation par Fibres Optiques suivant l'invention. Cet équipement comprend une ou plusieurs sources Lasers (1) associée(s) à des optiques de couplage d'homogénéisation et de répartition de lumière (2) entre la ou les sources Laser et un ou plusieurs Câble(s) optique(s) (3) comprenant une grand nombre de Fibres Optiques élémentaires (4). Dans ce qui suit, on suppose que seuls une source Laser (1) et un Câble optique (3) à Fibres optiques (4) sont utilisés.

A titre d'exemple dans le cas de l'utilisation d'un seul Câble optique (3), la quantité de Fibres Optiques élémentaires (4) dépend du nombre de microperforations par ligne et peut atteindre 1000 sans que ce chiffre soit limitatif de l'invention. Les Fibres Optiques élémentaires (4) sont compactées, par exemple suivant des techniques de collage, à une extrémité (5) du Câble optique (3) dans un manchon. A l'autre extrémité du Câble optique (3), les Fibres Optiques élémentaires (4) sont libres et espacées les unes des autres après fixation dans une réglette support (6) La répartition des Fibres Optiques élémentaires (4) dans la réglette (6) est identique à celle des microperforations sur le Film thermoplastique ou cellulosique.

La lumière rayonnée (7) par chaque Fibre Optique élémentaire (4) est ensuite homogénéisée et focalisée sur le film thermoplastique ou cellulosique (9) à perforer après passage dans un système optique (8) approprié.

Du fait d'un quantum d'énergie du photon $E = \dfrac{hc}{\lambda}$ (h = constante de Planck, c = vitesse de la lumière) d'autant plus élevé que la longueur d'onde lumineuse λ est faible, on utilise, préférentiellement suivant l'invention, mais d'une manière non limitative, des Lasers du type Excimère.

Par ailleurs, compte tenu, d'une part, de leur faible longueur d'onde et d'autre part de la durée extrêmement courte de l'émission de lumière par impulsion, ces Lasers permettent la réalisation, sans dégagement de chaleur, de microperforations dont le diamètre peut être aussi faible que 5 μm. De tels Lasers, utilisables à des longueurs d'onde de 152 à 351 nm sont actuellement disponibles sur le marché. Ils peuvent délivrer des énergies pulsées atteignant couramment 10 joules/cm2 pour des impulsions d'une durée de 10-9 sec. Cela correspond, par exemple, pour un équipement effectuant 400 microperforations par ligne à une énergie d'environ 25000 microjoule /cm2 et par microperforation. Cependant, l'énergie réellement nécessaire dépend du diamètre et de la profondeur de la microperforation.

Dans le cas des Films thermoplastiques ou cellulosiques relatifs à l'invention, il est estimé qu'avec les Lasers Excimère les plus utilisés, une énergie d'environ 3 joule/cm2 est nécessaire pour réaliser une microperforation de 1 um dé profondeur dans un Film thermoplastique. Cela signifie qu'une microperforation sur une épaisseur de 20 μm nécessite une énergie par microperforation d'environ 60 joule/cm2. Cette valeur est non exhaustive, elle dépend notamment du type de matériau constituant les films et de leur réaction plus ou moins forte aux phénomènes de photoablation.

Plus précisement, en corrélation avec les résultats originaux obtenus dans les laboratoires des inventeurs, il est revendiqué, suivant un autre objet de l'invention, que l'énergie nécessaire aux microperforations résulte, à chaque cas, d'un compromis entre certains des paramètres industriels les plus essentiels tels que les dimensions des microperforations a réaliser, la longueur d'onde optique utilisé, le type de matériau thermoplastique ou cellulosique à perforer et notamment sa transparence optique.

A titre d'exemple non limitatif de l'invention, des films complexes à base de monofluors tels que les OPP, PET, PE l'épaisseur identique de 20 μm ont fait l'objet de microperforations aux longueurs d'onde de 248 nm, 308 nm et 351 nm. Il est montré que selon le compromis mis en oeuvre, l'efficacité du micropercage est optimale à la longueur d'onde de 308 nm.

Dans le cas précédent d'une ligne de microperforations à 400 Fibres optiques, la durée de l'impulsion sera aussi augmentée, mais dépendra également du diamètre de chaque microperformation, pour satisfaire les besoins en énergie des microperforations profondes.

La quantité d'énergie délivrée par le Laser Excimère dépend notamment de la largeur de l'impulsion de lumière émise et de sa fréquence de répétition. Un grand nombre de paramètres sont ainsi à prendre en compte, en fonction de l'application souhaitée, dans le choix du Laser Excimère.

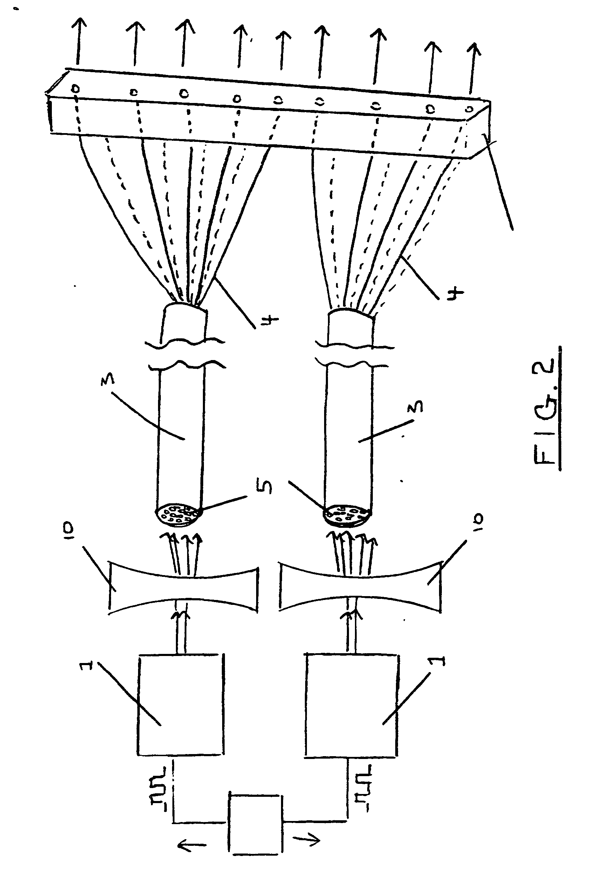

Selon un autre objet de l'invention montré sur la Figure 2 et particulièrement concerné lorsque l'énergie lumineuse délivrée par un seul Laser (1) est insuffisante, deux Lasers (1) sont associes chacun à un Câble optique (3). Une lentille (10), préférentiellement divergente permet, à partir du faisceau Laser de faible ouverture d'éclairer, d'une manière sensiblement homogène la totalité de la surface de l'extrémité (5) des 2 Câbles (3). Les Fibres unitaires (4) de chaque Câble optique (3) sont raccordés à la même réglette support (6). Le reste de l'équipement montré sur la Figure 1 demeure inchangé.

Il est entendu que l'utilisation d'écrite ci-dessus de 2 Lasers associes chacun à 1 Câble optique n'est pas limitative. Selon les applications et notamment le nombre total de Fibres Optiques par ligne de microperforations nécessaires, le nombre de lasers et des Câbles optiques correspondants pourra être supérieur à 2.

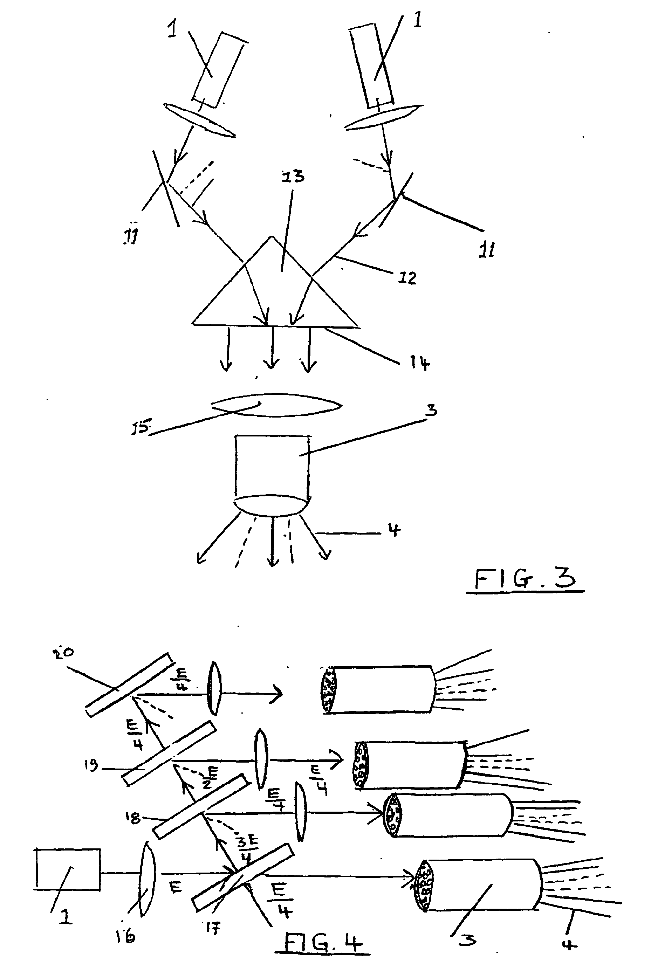

La Figure 3 montre selon un nouvel objet de l'invention un exemple de couplage de 2 Lasers Excimère (1) dans un seul Câble (3) à Fibres Optiques (4).

L'énergie lumineuse rayonnée par les 2 Lasers (1), subissent après focalisation une réflection totale sur 2 miroirs (11).

Les rayons lumineux réfléchis (12) sont captés par un Prisme (13) et à leur sortie sur la face (14) du Prisme (13) sont focalisés par une Lentille (15) dans un Câble (3) à Fibres Optiques (4).

Les Fibres optiques élémentaires (4) utilisées dans le cadre de l'invention sont un élément essentiel des nouveaux systèmes de microperforation proposes. Lorsque leur nombre dans un Câble optique (3) est élevé, la mise en oeuvre du Câble (3) et des Fibres optiques élémentaires (4) peut être simplifiée si l'énergie lumineuse émise par un seul Laser est repartie entre plusieurs Câbles optiques (3).

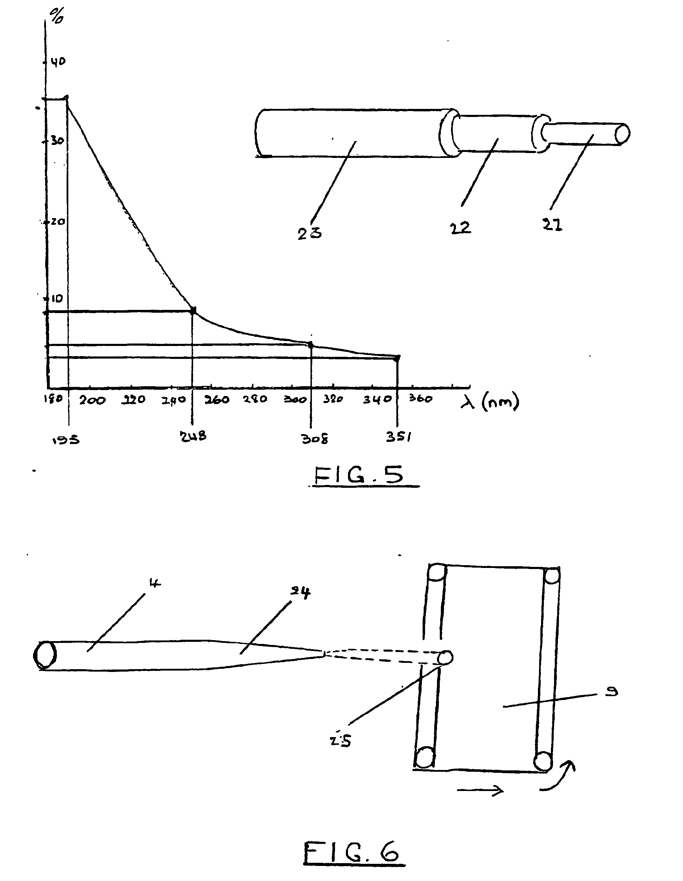

La Figure 4 montre, selon un autre objet de l'invention un exemple de réalisation non limitatif dans laquelle un seul Laser, de puissance suffisante, délivre l'énergie lumineuse à 4 Câbles optiques (3).

La lumière d'énergie E émise par le Laser (1) et après passage dans une lentille de focalisation (16) est reçue sur une lame semi-réfléchissante (17) transmettant une lumière d'énergie $\frac{E}{4}$ et réfléchissant une lumière d'énergie $\frac{3E}{4}$.

Cette lumière réfléchie est reçue par une deuxième lame semi-réfléchissante (18) transmettant une lumière d'energie $\frac{E}{4}$ et réfléchissant une lumière d'énergie $\frac{E}{2}$. Cette lumière réfléchie est reçue par une nouvelle lame semi-réfléchissante (19) qui transmet et réfléchit une lumière de même énergie $\frac{E}{4}$. Cette lumière réfléchie est reçue par une dernière lame (20) à réflection totale qui réfléchit une énergie $\frac{E}{4}$.

Dans cette configuration selon l'invention, les 4 Câbles optiques (3) recoivent la même énergie lumineuse, soit le quart de l'énergie totale émise par le Laser (1).

Les Fibres optiques (4) utilisées dans le cadre de l'invention doivent en priorité présenter des bons coefficients de transmission dans la gamme des longueurs d'onde lumineuse émises dans l'ultraviolet par les Lasers Excimere.

Selon un autre objet de l'invention, on utilise preferentiellement des Fibres de Silice fondue et éventuellement des Fibres optiques de Quartz fondu.

Des Fibres optiques plastiques, par exemple du type Polyméthylmétacrylate (PMMA), peuvent aussi être employées par suite de leur remarquable souplesse d'emploi et d'une grande solidité, même dans des conditions d'utilisation extrêmes. Cependant leur perte de transmission, aux très faibles longueurs d'ondes ultraviolettes est élevée, et dans l'état de l'art actuel, leur emploi peut être réservé, d'une manière non limitative, aux longueurs d'ondes supérieures à 300 nm.

Les Fibres Optiques en silice fondue, préconisées selon un des objets de l'invention présentent des caractéristiques de transmission particulièrement satisfaisantes dans l'ultraviolet. La Figure 5 montré les caractéristiques de transmission de ces Fibres Optiques en silice fondue maintenant disponibles sur le marche, et d'une longueur de 1 mètre. Cette longueur de 1 mètre à été choisie dans le cadre du Brevet d'une manière non limitative, mais elle correspond à la longueur moyenne nécessaire dans un grand nombre d'applications. On constate, à titre d'exemple, qu'aux longueurs d'onde de 351 nm, 308nm, 248nm et 193nm émises par les Lasers Excimère pouvant être utilisés dans les systèmes de microperforations selon l'invention, les pertes de transmission pour une Fibre Optique en silice fondue de longueur égale à 1 mètre sont respectivement de 2,3%, 3,5%, 8,4% et 35%. L'utilisation de Lasers Excimère émettant une radiation lumineuse UV supérieure à 200 nm est donc particulièrement préconisée dans le cadre de l'invention, sans que ce choix soit en aucun cas limitatif.

Les Fibres Optiques en silice fondue employées dans le cadre de l'invention présentent une ouverture numérique relativement faible égale à environ 0,22, soit un angle total de diffusion de la lumière d'environ 25 degrés. Cette faible ouverture du faisceau lumineux facilite l'obtention de microperforations de faible diamètre.

La structure de la Fibre Optique (4) utilisée dans le cadre de l'invention est aussi montrée sur la Figure 5. Le coeur (21) de la Fibre Optique (4) est réalisé par étirage ou filage d'un matériau en silice fondue. La gaine optique (22) est réalisée en silice dopée de façon à obtenir un indice optique inférieur à celui de la silice fondue et satisfaire aux conditions de guidage nécessaires.

Une 2éme gaine (23) ne nécessitant aucune propriété optique particulière est utilisée pour améliorer dans le cadre de l'invention les propriétés mécaniques de la Fibre Optique proprement dite.

Compte tenu de la nécessité de réaliser des microperforations de très faible diamètre, entre 10 et 40 um par exemple, le diamètre "optique" des Fibres Optiques (4) utilisées dans le cadre de l'invention, soit le diamètre de la gaine optique, doit être le plus faible possible, tout en conservant des propriétés mécaniques suffisantes. A titre non limitatif, la formule approchée $\underline{D = 4d}$ où D est le diamètre de la gaine optique et d le diamètre du trou des micro-performations permet de choisir avec une bonne approximation les dimensions de la Fibre Optique (4) Dans le cadre de l'invention, des Fibres Optiques (4) de diamètre optique égal à 110 $\mu m$ et de diamètre de coeur égal à 100 $\mu m$ sont utilisées sans que ce choix soit limitatif de l'invention. Pour des raisons notamment de tenue en température (400°C), de mise en oeuvre aisée dans un Câble Optique et de manutentions diverses, on utilise à titre non limitatif une gaine mécanique extérieure (23) en polyimide.

Les Fibres Optiques élémentaires (4) sont fixées dans la réglette (6) où des échancrures ont été aménagées pour loger chacune des Fibres Optiques (4) par simple collage ou suivant des procédés mécaniques connus.

Le diamètre des microperforations recherche étant très inférieur à celui des Fibres Optiques (4) et la répartition de la lumière sur le Film thermoplastique ou cellulosique (9) dépendant de l'ouverture numérique de la Fibre Optique (4), il est nécessaire selon l'invention, soit d'effectuer une préparation particulière des extrémités diffusantes des Fibres Optiques (4), soit d'utiliser un sous-ensemble homogénéiseur-focalisateur (8).

Comme il est montré sur la Figure 6 et selon l'invention, la Fibre Optique (4) est terminée par un cône (24) obtenu suivant des procédés connus par étirage à haute température par exemple. La dimension reelle de la tache lumineuse (25) permettant une microperforation dépend de la distance entre l'extrémité du cône et le Film défilant. Si l'extrémité du cône et le Film sont proches du contact, on admet que la dimension de la tache lumineuse sur le Film est égal à celle de l'extrémité de la Fibre conique. Dans le cas contraire, la dimension de la tache lumineuse sur le Film dépendra de l'ouverture numérique à l'extrémité rayonnante du cône et sera donc plus élevée que la dimension de l'extrémité conique de la Fibre Optique.

L'utilisation d'un sous-ensemble homogeneiseur-focaliseur (8) se révèle la plus satisfaisante dans beaucoup d'applications mais n'est pas couvert par la présente invention telle que definie dans le jeu de revendications. Certains dispositifs sont commercialisés, mais leur coût est élévé et leur utilisation complexe, surtout lorsque le nombre de Fibres Optiques par ligne est élévé.

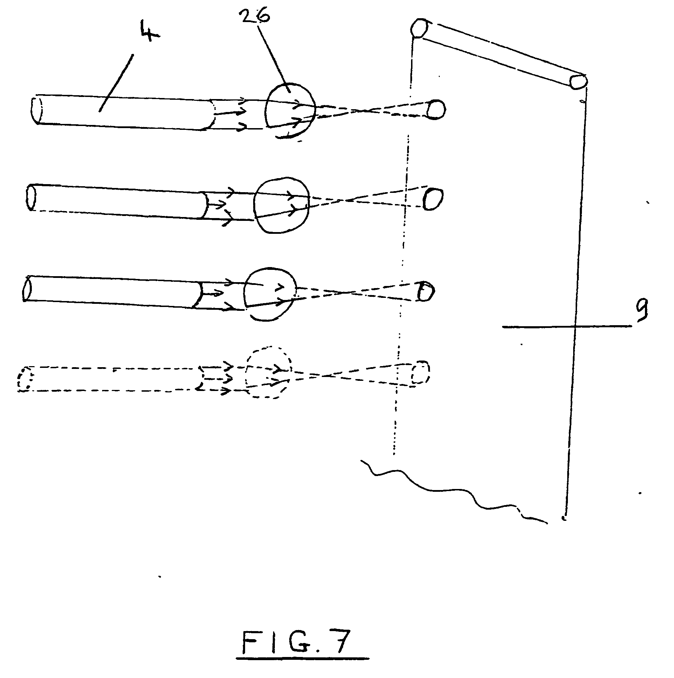

Suivant un exemple non couvert par la présente ivention, on utilise des lentilles focalisatrices comme il est montré sur la Figure 7. Ces lentilles (26) sont préférentiellement des lentilles sphériques focalisant la lumière au voisinage de la surface de la lentille. Ces lentilles sphériques sont placées sensiblement côte à côte, indifféremment, dans le sous-ensemble (8) ou la réglette (6) et en face de chacune des Fibres Optiques (4). A titre d'exemple non limitatif de l'invention, la réglette (6) comporte 400 Fibres Optiques (4) de diamètre optique 110 $\mu$m et la quantité de microperforations étant fixée à 160 000, on utilise des lentilles sphériques (26) produites par la Société COHERENT de diamètre 2 mm et d'une distance focale 1,1 mm. Le Film thermoplastique ou cellulosique (9) défilant est placé à une distance de 1 mm de la surface des sphères (26) et le diamètre de la tache lumineuse sur le Film thermoplastique ou cellulosique est voisin de 30 $\mu$m.

Le Film thermoplastique ou cellulosique (9) défile devant les Fibres Optiques épointées ou le sous-ensemble homogénéiseur-focalisateur (8) à une vitesse dépendant de la fréquence de répétition des impulsions lumineuses rayonnées par le Laser. Le temps de passage (T) d'une ligne de microperforations à l'autre doit être très voisin du temps séparant 2 impulsions lumineuses successives émises par le Laser.

Le temps T est calculé par la formule :

$$ \text{T d'une ligne à l'autre (seconde)} = \frac{\text{Temps de défilement/mètre du Film (seconde)}}{\text{nombre de lignes de micro-perforations/mètre}} $$

A titre d'exemple non limitatif, si le Temps de défilement par mètre est de 1/3 de seconde et le nombre de lignes de microperforations par mètre est de 500 avec 1000 Fibres Optiques par ligne, soit 500 000 micro-perforations/ seconde, le temps de passage d'une ligne à l'autre est de i seconde, ce qui impose une fréquence de répétition de 1500 HZ pour le Laser.

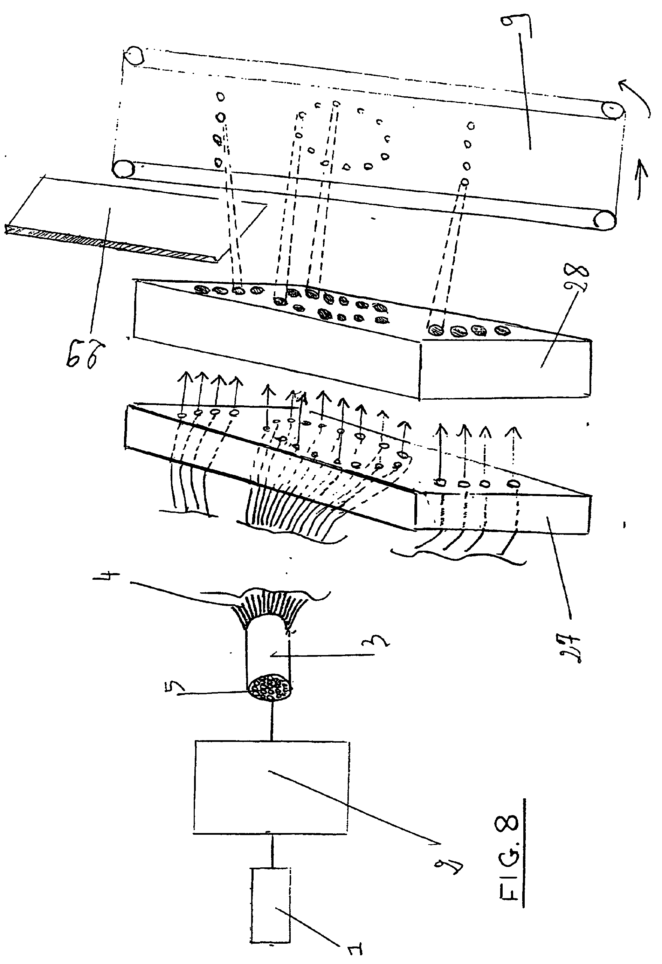

Selon un autre objet général de l'invention, et comme il est montré sur la Figure 8, le Film thermoplastique ou cellulosique (9) ne défile pas progressivement, de manière régulière, devant une réglette (6) de Fibres Optiques comme montré sur la Figure 1, mais présente une position fixe pendant la durée des microperforations. Dans ces applications, les microperforations ne se présentent pas sous la forme habituelle de lignes de trous parallèles entre elles et successives, mais représentent au contraire, le plus souvent, un motif varié, par exemple à forme circulaire ou à connotation publicitaire.

Selon l'invention les Fibres Optiques (4) ne sont plus uniquement raccordées linéairement sur une réglette support unique (6) comme il est montré Figure 1 mais suivant une matrice (27) de Fibres Optiques (4) représentant le motif à microperforer ultérieurement sur le Film (9). Les lasers (1), les Fibres Optiques (4) utilisées et l'homogénéiseur-focalisateur (28) sont identiques fonctionnellement à ceux décrits suivant les exemples précédents, non couverts par la présente invention.

Cependant, les lentilles de focalisation et d'homogénéisation individuelles, dans le cas d'un grand nombre de fibres, peuvent être remplacées par un réseau de microlentilles intégrées dont les facilités d'utilisation sont plus grandes et le coût global plus faible.

Lorsqu'un motif de microperforations a été réalisé, l'obtention de nouveaux motifs identiques nécessite le déplacement d'une longueur de Film vierge à la position précédente.

Cette opération peut s'effectuer, à titre non limitatif, à l'aide d'un moteur pas à pas. Pendant ce déplacement, un cache (29) de lumière est inserré entre l'homogénéiseur-focalisateur (28) et le Film thermoplastique ou cellulosique (9) de façon à isoler momentanément le Film thermoplastique ou cellulosique (9) des irradiations lumineuses.

**Revendications**

1.  Système optique de microperforations de films thermoplastiques ou cellulosiques (9), défilants ou fixes, comportant une ou plusieurs sources laser (1) délivrant, via un dispositif de couplage, d'homogénéisation et de répartition de puissance, des énergies lumineuses dans un ou plusieurs câbles (3) à fibres optiques (4), les extrémités desquelles étant raccordées soit suivant une ligne à une réglette support (6), soit à un bloc matriciel (27) et après passage dans un système homogénéiseur-focalisateur (8, 28) générant un grand nombre de taches lumineuses perforatrices le très faible diamètre sur le film thermoplastique ou cellulosique (9), **caractérisé en ce que** le dispositif d'homogénéisation et de focalisation (8) comporte des fibres optiques élémentaires (4) qui présentent une extrémité diffusante (24) de forme conique.

2.  Système optique de microperforations de films selon la revendication 1 **caractérisé en ce que** les Sources Lasers (1) sont conçus pour émettre des longueurs d'onde lumineuses se situant dans le domaine ultraviolet lointain.

3.  Système optique de microperforations de films selon la revendication 1 **caractérisé en ce que** le coeur (21) des Fibres optiques (4) est réalisé à partir d'un matériau en silice (ou quartz) fondue et la gaine optique (22) en silice dopée.

4.  Système optique de microperforations de films selon les revendications 1 et 3 **caractérisé en ce que** le diamètre de la gaine optique (22) des Fibres optiques(4) est sensiblement 4 fois supérieur à celui de la tache optique de photoablation reçue par le Film (9).

5.  Système optique de microperforations de films selon l'une des revendications de 1 à 4 **caractérisé en ce que** le dispositif de couplage, d'homogénéisation et de répartion d'énergie lumineuse (2) se compose de plusieurs Lasers (1) associés à un nombre égal de Câbles (3) à Fibres Optiques (4), lesquelles sont raccordées à une même réglette support (8).

6.  Système optique de microperforations de films selon l'une des revendications de 1 à 4 **caractérisé en ce que** le dispositif de couplage, d'homogénéisation et de répartion d'énergie lumineuse (2) se compose de 2 Lasers (1) dont les énergies lumineuses individuelles émises s'ajoutent après passage dans un prisme (13), l'énergie totale résultante étant reçue dans un unique Câble (3) à Fibres Optiques (4).

7.  Système optique de microperforations de films selon l'une des revendications 1 à 4 **caractérisé en ce que** le dispositif de couplage, d'homogénéisation et de répartition d'énergie lumineuse (2) comprend un Laser (1) unique émettant une énergie lumineuse répartie également entre 4 Câbles (3) à Fibres Optiques (4).

8.  Système optique de microperforations de films selon l'une des revendications de 1 à 7 **caractérisé en ce que** le Dispositif de raccordement, de couplage et de répartition d'énergie lumineuse comporte des Fibres optiques (4) raccordées à un bloc matriciel (27), lesquelles Fibres Optiques (4) représentent le motif d'une configuration complexe tel qu'un dessin à deux dimensions dont les microperforations sur le film thermoplastique ou cellulosique (9), placé en position fixe, en reproduise les

9.  Système optique de microperforations de films selon l'une des revendications de 1 à 8 **caractérisé en ce que** le Dispositif d'homogénéisation et de focalisation (28) comporte des Fibres Optiques (4) dont les extrémités associées représentent, suivant un pointillisme, le motif d'une configuration complexe tel qu'un dessin à deux dimensions et délivrent sur le film (9) une énergie lumineuse sous forme de spots lumineux générant les microperforations.

10. Système optique de microperforations de films selon l'une quelconque des revendications de 1 à 9 **caractérisé en ce que** l'énergie optique optimale nécessaire aux microperforations doit faire l'objet pour chaque matériau d'un compromis entre divers paramètres tels que les dimensions des microperforations : section et profondeur, la longueur d'onde laser à utilisés, la transparence optique des films.

**Patentansprüche**

1.  Optisches Mikroperforationssystem von thermoplastischen oder Zellulosefolien (9), die vorbeiziehend oder feststehend sind, das eine oder mehrere Laserquellen (1) enthält, die über eine Verbindungseinrichtung zur Homogenisierung und Leistungsverteilung Lichtenergie in ein oder mehrere Kabel (3) aus optischen Fasern (4) ausgeben, wobei die Enden von diesen verbunden sind, sei es einer Linie zu einer Trägerleiste (6) folgend oder zu einem Matrizenblock (27) und nach dem Durchtritt in ein System zum Homogenisieren und Bündeln (8, 28), eine große Anzahl von Lichtflecklöchern mit einem sehr geringen Durchmesser auf der thermoplastischen oder Zellulosefolie (9) erzeugen, **dadurch gekennzeichnet, dass** die Homogenisier- und Bündelungseinrichtung (8) optische Elementarfasern (4) enthält, die ein sich verbreiterndes Ende (24) in konischer Form zeigen.

2. Optisches Mikroperforationssystem von Folien nach Anspruch 1, **dadurch gekennzeichnet, dass** die Laserquellen (1) entwickelt sind, um Lichtwellenlängen auszusenden, die im entfernten Ultraviolettbereich liegen.

3. Optisches Mikroperforationssystem von Folien nach Anspruch 1, **dadurch gekennzeichnet, dass** das Herz (21) der optischen Fasern (4) realisiert ist auf der Grundlage eines geschmolzenen Siliciummaterials (oder Quarzes) und der optische Mantel (22) auf der Grundlage eines dotierten Siliciums.

4. Optisches Mikroperforationssystem von Folien nach den Ansprüchen 1 und 3, **dadurch gekennzeichnet, dass** der Durchmesser des optischen Mantels (22) der optischen Fasern (4) deutlich 4mal größer als der des optischen Flecks der durch die Folie (9) erhaltenen Lichtabtragung ist.

5. Optisches Mikroperforationssystem von Folien nach einem der Ansprüche 1 bis 4, **dadurch gekennzeichnet, dass** die Verbindungseinrichtung zum Homogenisieren und zum Verteilen der Lichtenergie (2) sich aus zahlreichen Lasern (1) zusammensetzt, verbunden mit einer gleichen Anzahl von Kabeln (3) aus optischen Fasern (4), die an eine selbe Trägerleiste (6) angeschlossen sind.

6. Optisches Mikroperforationssystem von Folien nach einem der Ansprüche 1 bis 4, **dadurch gekennzeichnet, dass** die Verbindungseinrichtung zum Homogenisieren und zum Verteilen der Lichtenergie (2) sich aus 2 Lasern (1) zusammensetzt, von denen die einzelnen ausgesandten Lichtenergien nach dem Durchtritt in ein Prisma (13) sich addieren, wobei die sich ergebende Gesamtenergie in einem einzigen Kabel (3) aus optischen Fasern (4) empfangen wird.

7. Optisches Mikroperforationssystem von Folien nach einem der Ansprüche 1 bis 4, **dadurch gekennzeichnet, dass** die Verbindungseinrichtung zum Homogenisieren und zum Verteilen der Lichtenergie (2) einen einzigen Laser (1) enthält, der Lichtenergie, gleichmäßig verteilt zwischen 4 Kabeln (3) aus optischen Fasern (4), aussendet.

8. Optisches Mikroperforationssystem von Folien nach einem der Ansprüche 1 bis 7, **dadurch gekennzeichnet, dass** die Einrichtung zum Anschließen, zum Verbinden und zum Verteilen von Lichtenergie optische Fasern (4) enthält, die an einen Matrizenblock (27) angeschlossen sind, wobei die optischen Fasern (4) einen komplexen Aufbau aufweisen, wie z. B. ein zweidimensionales Muster, bei dem die Mikroperforätionen auf der thermoplastischen oder Zellulosefolie (9), angeordnet in einer festen Position, Umrisse darauf wiedergeben.

9. Optisches Mikroperforationssystem von Folien nach einem der Ansprüche 1 bis 8, **dadurch gekennzeichnet, dass** die Einrichtung zum Homogenisieren und Bündeln (28) optische Fasern (4) enthält, von denen die Enden verbunden sind, die einer Punktierung folgend einen komplexen Aufbau zeigen, wie z. B. ein zweidimensionales Muster und die auf der Folie (9) eine Lichtenergie in Form von Lichtpunkten, die Mikroperforationen erzeugen, abgeben.

10. Optisches Mikroperforationssystem von Folien nach einem der Ansprüche 1 bis 9, **dadurch gekennzeichnet, dass** die für Mikroperforationen erforderliche optimale optische Energie für jedes Material unter einen Kompromiss fallen muss zwischen verschiedenen Parametern, wie den Abmessungen der Mikroperforatianen: Querschnitt und Tiefe, der Wellenlänge des zu verwendeten Lasers, der optischen Transparenz der Folien.

**Claims**

1. Optical system of microperforations in moving or fixed thermoplastic or cellulosic films (9), comprising one or more laser sources (1) delivering, via a coupling, homogenising and power distribution device, light energy from one or more cables (3) comprising fibre optics (4), the ends of which are connected either in a line to a support batten (6) or to a matrix block (27) and, after passing into a homogenising/focussing system (8, 28), generating a large number of perforating light spots of very small diameter on the thermoplastic or cellulosic film (9), **characterised in that** the homogenising and focussing device (9) comprises elementary fibre optics (4) which have a conical diffusing end (24).

2. Optical system of microperforations in films according to claim 1, **characterised in that** the laser sources (1) are designed to emit light wavelengths in the far ultraviolet range.

3. Optical system of microperforations in films according to claim 1, **characterised in that** the core (21) of the fibre optics (4) is produced from a molten silica (or quartz) material and the optical cladding (22) is made from doped silica.

4. Optical system of microperforations in films according to claim 1, **characterised in that** the diameter of the optical cladding (22) of the fibre optics (4) is substantially 4 times greater than that of the optical photoablation spot received by the film.

5. Optical system of microperforations in films according to one of claims 1 to 4, **characterised in that** the coupling, homogenising and light energy distribution device (2) is made up of a plurality of lasers (1) associated with an equal number of cables (3) comprising fibre optics (4), which are connected to the same support batten (8).

6. Optical system of microperforations in films according to one of claims 1 to 4, **characterised in that** the coupling, homogenising and light energy distribution device (2) is made up of 2 lasers (1) the individual light energies emitted by which are added together after passing into a prism (13), the resulting total energy being received in a single cable (3) comprising fibre optics (4).

7. Optical system of microperforations in films according to one of claims 1 to 4, **characterised in that** the coupling, homogenising and light energy distribution device (2) comprises a single laser (1) emitting a light energy distributed equally between 4 cables (3) comprising fibre optics (4).

8. Optical system of microperforations in films according to one of claims 1 to 7, **characterised in that** the connecting, coupling and light energy distribution device comprises fibre optics (4) connected to a matrix block (27), said fibre optics (4) representing the pattern of a complex configuration such as a two-dimensional design the contours of which are reproduced on the thermoplastic or cellulosic film (9), placed in a fixed position, by the microperforations.

9. Optical system of microperforations in films according to one of claims 1 to 8, **characterised in that** the homogenising and focussing device (28) comprises fibre optics (4) the associated ends of which represent, in an arrangement of dots, the pattern of a complex configuration such as a two-dimensional design and deliver onto the film (9) a light energy in the form of spots of light that produce the microperforations.

10. Optical system of microperforations in films according to any one of claims 1 to 9, **characterised in that** the optimum optical energy needed for the microperforations should represent a compromise for each material between various parameters such as the dimensions of the microperforations, i.e. cross-section and depth, the laser wavelength to be used and the optical transparency of the films.

FIG. 1

EP 1 059 139 B1

FIG. 2

FIG. 3

FIG. 4

FIG. 5

FIG. 6

FIG. 7

FIG.8